# EUROPÄISCHE PATENTSCHRIFT

(11) **EP 1 983 102 B1**
(45) Veröffentlichungstag und Bekanntmachung des Hinweises auf die Patenterteilung: **30.03.2011**
(21) Anmeldenummer: 08007620.1
(22) Anmeldetag: 18.04.2008
(51) Int. Cl.: E01C 11/10, C09J 193/00

(54) **Anschmelzbares plastisch-elastisches Bitumen-Fugenband zur Herstellung von Nähten und von Anschlüssen und Verfahren zu dessen Herstellung**
Surface-fuseable plastic-elastic bitumen joint strip for producing seams and connections and method for production of same
Bande de joint en bitume plastique élastique pouvant fondre destinée à la fabrication de raccords et son procédé de fabrication

(30) Priorität: 18.04.2007 DE 102007018672
(43) Veröffentlichungstag der Anmeldung: 22.10.2008
(73) Patentinhaber: Kebulin-Gesellschaft Kettler GmbH & Co. KG, 45701 Herten-Westerholt (DE)
(72) Erfinder: Vengels, Dieter, 46514 Schermbeck (DE)
(74) Vertreter: GROSSE SCHUMACHER KNAUER VON HIRSCHHAUSEN

(56) Entgegenhaltungen:
- EP-A- 0 792 973
- DE-U1- 20 002 475

## Beschreibung

### GEBIET DER ERFINDUNG

Die Erfindung betrifft ein anschmelzbares plastisch-elastisches Bitumen-Fugenband für den Ingenieur-, Straßen-, Tief-, Hoch- und Kanalbau zur Herstellung von Nähten und von Anschlüssen im Kaltverlege-System, auch zwischen Heißasphaltschichten und Rand-Begrenzungen, mit einem für das Fixieren des Fugenbandes an einer ersten Arbeitsflanke (Anschlussflanke) ausreichenden Klebrigkeit und einer der Fugenbreite entsprechenden oder diese übersteigenden Dicke sowie ein Verfahren zum Herstellen eines solchen Bitumen-Fugenbandes.

### TECHNOLOGISCHER HINTERGRUND

Bitumen-Fugenbänder können in Fahrbahndecken aus Asphalt, bei Einbauten z.B. Kanaldeckeln, Abläufen etc., und bei Anschlüssen zwischen Beton und Asphalt vorgesehen werden. Sie sind ausgelegt, das thermisch bedingte Schrumpfen nach dem Einbau des Asphaltes beim Erkalten sowie Allgemeinbewegungen aufzunehmen. Sie können für Änderungen der Fugenspaltbreite bis zu in der Regel 10% eingesetzt werden. Bitumenfugenbänder sind Bandprofile aus thermoplastischem Material mit vergleichsweise geringer elastischer Rückverformung. Vor Anbringen des Bitumen-Fugenbandes an eine (kalte) Anschlussflanke (auch Arbeitsflanke genannt) ist für eine ausreichende Haftung des Bitumen-Fugenbandes an der Anschlusskante zu sorgen. Dies kann durch einen Voranstrich, Anschmelzen der zur Anhaftung zu bringenden Fugenbandseite und/oder durch anderweitiges Klebrigmachen der entsprechenden Fugenbandseite oder der Anschlussflanke erfolgen. Da bei dem Einsatz von schmelzbaren Fugenbändern zu berücksichtigen ist, dass ein Durchschmelzen des Fugenbandes durch die Mischguttemperatur, d.h. die Temperatur des heißen Asphaltes nach vorherigem Anbringen des Bitumen-Fugenbandes an der Anschlussflanke bis zu dieser "kalten Seite", d.h. bis zur Anschlussflanke nicht gewährleistet ist, ist sicherzustellen, dass das Fugenband vor dem Einbau des Asphaltes an seiner kalten Seite, also an der Anschlussflanke, vollflächig und dicht mit der Anschlussflanke verbunden wird.

Die Problematik der Arbeitsfugendichtung an Fahrbahndecken und dergleichen mit Bitumen-Fugenbändern wird in der DE 196 03 896 A1 im Einzelnen beschrieben. Demnach werden Fugenbänder insbesondere im Straßenbau zur Herstellung von Nähten und von Anschlüssen verwendet. Nähte entstehen beim Verbund von nebeneinander liegenden Einbauten aus Mischgut mit vergleichbaren Eigenschaften. Als Anschlüsse werden bezeichnet die Verbindungen von Einbaubahnen aus Mischgut mit unterschiedlichen Eigenschaften. Dazu gehören Walzasphalt (Asphaltbeton, Split, Mastixasphalt) an Gussasphalt oder umgekehrt. Die Verbindung von Gussasphalt an Gussasphalt ist ebenfalls als Anschluss herzustellen. Eine besondere Notwendigkeit für sogenannte Anschlüsse ergibt sich bei einem Bau von "neu" gegen "alt", da hier der Unterschied in den Eigenschaften der einzubringenden Deckschichtmaterialien schon allein durch die Liegedauer gegeben ist, unabhängig von der Mischgutart bei den zu verbindenden Flächen. Nähte und Anschlüsse sind Beanspruchungen aus Verkehr und Klima ausgesetzt, wobei die Kräfte aus dem Verkehr besonders einflussreich sind, wenn Ausgrabungen vorliegen. Durch Setzung im umgebenden Bereich bauen sich Scherkräfte auf, die die Verbindung neu/alt besonders in der Deckschicht spürbar belasten. Die Anforderungen an derartige Verbindungen sind daher sehr hoch. Sie sollen wasserdicht sein, d. h. sich nicht öffnen und Einwirkung von Verkehr und Klima. Es gilt daher mehr Bitumen als bisher in die Anbindungsflanke einzubringen. Dies ist besonders wichtig bei Anschlüssen. Hier muss es das Ziel sein, an dieser Stelle ein weiches Gelenk einzubauen, also eine Höchstmenge an Bitumen zum Dichten, Bewegen und Haften zu platzieren. Um eine kalte Verlegung des Fugenbandes, d. h. ohne Zurhilfenahme einer Flamme zu ermöglichen, schlägt die DE 196 03 896 A1 vor, ein Fugenband aus einem Polymervergüteten Straßenbau-Bitumen, das auf wenigstens einer Seitenfläche mit einer Kleberschicht versehen ist.

Auch aus der EP 0 792 973 B2 ist es bekannt, Fugenbänder an einer anschlussflankenseitigen Oberfläche klebriger zu machen, als es der Fugebandkörper ist. Dies geschieht in Gestalt einer dünnen, auf der entsprechenden Seite des Fugenbandes aufzubringenden Schicht, wie einer besonderen Kleberschicht. Zum gleichen Zweck schlägt die EP 1 023 414 B1 vor, auf der betreffenden Oberfläche des Fugenbandes eine bitumenhaltige Schmelzbeschichtung aufzubringen. In beiden Fällen haben diese vergleichsweise klebrigeren Schichten eine Dicke im unteren Millimeterbereich. Da Anschlussflanken nicht nur aus Materialien mit glatten Oberflächen, wie metallischen Flacheisen und dergleichen, sondern auch aus Materialien mit vergleichsweise rauer Oberfläche, wie aus nicht vergüteten Betonoberflächen bestehen können, reicht die Klebrigkeit dieser bekannten Bitumenfugenbänder nur dann zum Sicherstellen einer ausreichend dichten Arbeitsfuge aus, wenn die (kalte) Anschlussflanke mit einer ausreichend dicken Vorstrichschicht präpariert ist. Es besteht insoweit das Ziel, auf das an sich mögliche Erhitzen und damit klebrig und plastisch verformbar machen der zur kalten Anschlussflanke hin weisenden Oberfläche des Bitumenfugenbandes aus Zeit- und Kostenersparnisgründen zu verzichten.

### DARSTELLUNG DER ERFINDUNG

Der Erfindung liegt die Aufgabe zugrunde, ein einfach und schnell zu verarbeitendes Bitumen-Fugenband der gattungsgemäßen Art und ein Verfahren zu dessen Herstellung vorzuschlagen, durch das die Vorbehandlung der kalten Anschlussflanke, an der das Bitumen-Fugenband dicht und vollflächig angebracht werden soll, weniger kritisch als nach dem Stand der Technik ist.

Zur Lösung dieser Aufgabe wird ein anschmelzbares Bitumen-Fugenband mit den Merkmalen des Anspruchs 1 und ein Verfahren zum Herstellen eines solchen Fugenbandes nach Anspruch 12 vorgeschlagen. Die Erfindung beruht demnach auf dem Grundgedanken, ein Bitumen-Fugenband mit einem Fugenbandkörper ausreichender klebriger Bitumen-Masse zu schaffen, das an mindestens einer der von der Nahtflanke fortweisenden Seitenflächen eine anschmelzbare Deckschicht vergleichsweise geringerer Klebrigkeit als die des Fugenbandkörpers aufweist. Zu diesem Zweck sieht die Erfindung einen Fugenbandkörper aus einem Material ausreichender Klebrigkeit vor, der wenigstens auf einer Oberfläche eine bitumenhaltige Deckschicht aufweist, die im Vergleich zum Fugenbandkörper einen erhöhten Anteil an mineralischem Füllstoff, Fasern und/oder sonstigen, die Klebrigkeit der Deckschicht im Vergleich zum Fugenbandkörper verringernden Additive aufweist.

Unter einem "Fugenbandkörper" wird im Sinne der Erfindung ein Querschnittsbereich des Bitumen-Fugenbandes verstanden, der einen erheblichen Massenanteil des Bitumen-Fugenbandes von 10- und mehr Massen-Gewichts% ausmacht und eine ausreichende Dicke aufweist, an einer Anschlussflanke in Oberflächenunregelmäßigkeiten der Anschlussflanke plastisch einzudringen, ohne das elastische Rückstellkräfte den Fugenbandkörper aus dieser Anlage wieder ablösen. Demgegenüber wird unter einer anschmelzbaren Deckschicht vergleichsweise geringerer Klebrigkeit im Sinne der Erfindung verstanden, dass diese nicht in Lage ist, mit elastischen Rückstellkräften den Fugenbandkörper aus einer an der Anschlussflanke anhaftenden Position elastisch wieder herauszulösen. - Anschmelzbare Bitumen-Fugenbänder, die aus einem selbstklebenden Bitumenband bestehen, das auf einer Flachseite zumindest streifenweise unklebrig gemacht wird, indem eine Vliesabdeckung als Streifen aufgebracht wird, ist aus der DE 202 00 884 U1 zwar bekannt. Im durch Vlies abgedeckten Flächenbereich besteht allerdings keine Anschmelzbarkeit und dieser Flächenbereich dient auch nicht als Dichtfläche sondern der Handhabungsvereinfachung, nämlich als Verlegehilfe ohne spätere Klebewirkung. Auf Letztere ist die Erfindung in Form der Anschmelzbarkeit der weniger klebrigen Deckschicht aber gerade angewiesen.

Ein Fugenbandkörper mit ausreichender Klebrigkeit für das Kaltverkleben mit einer Anschlussflanke wird insbesondere dann erreicht, wenn der Fugenbandkörper aus einer bitumenhaltigen Masse aus 40 bis 90 Massen-% Bitumen, 1 bis 10 Massen-% Polymer, wie thermoplastischem Kautschuk, Styrolbutadien Styrol oder dergleichen, 1 bis 10 Massen-% mindestens eines Weichmachers, wie eines Öls, insbesondere naphtareichen Ölen, 10 bis 70 Massen-% mindestens eines Mineralstoffes, wie Gesteinsmehl oder dergleichen und 1 bis 10 Massen-% Faserstoffen besteht. Eine für den Anwendungszweck ausreichende Verringerung der Klebrigkeit gegenüber dem Fugenbandkörper auf einer Seitenfläche des Fugenbandkörpers wird bevorzugt durch Verschiebung der prozentualen Zusammensetzung der Zusammensetzung des Fugenbandköpers erreicht. Insbesondere durch Verringerung des Weichmacheranteils bei gleichzeitiger Erhöhung des Mineralstoffanteils und/oder des Faserstoffanteils. Es hat sich herausgestellt, dass hierdurch sich eine ausreichende Verminderung der Klebrigkeit einstellt, so dass die Verarbeitbarkeit des Fugenbandes trotz der hohen Klebrigkeit des Fugenbandkörpers gegeben bleibt. Eine typische Zusammensetzung der anschmelzbaren Deckschicht vergleichsweise geringerer Klebrigkeit besteht aus einer bitumenhaltigen Masse aus 30 - 80 Massen-% Bitumen, 1 - 10 Massen-% Polymer, wie thermoplastischem Kautschuk-Styrol-Butadien-Styrol oder dergleichen, 0 bis 3 Massen-% mindestens eines Weichmachers, 30 bis 80 Massen-% mindestens eines Mineralstoffes, wie Gesteinsmehl oder dergleichen und 2 bis 10 Massen-% Faserstoffen.

Zur Verbesserung der Verarbeitbarkeit des erfindungsgemäßen Bitumen-Fugenverbandes, hat es sich als besonders vorteilhaft erwiesen, den Fugenbandkörper dreiseitig von der anschmelzbaren Deckschicht vergleichsweise geringerer Klebrigkeit zu umgeben. Hierzu wird die Deckschicht vergleichsweise geringerer Klebrigkeit etwa rinnenförmig ausgebildet, wobei der Fugenbandkörper in die gebildete Rinne aus der Deckschicht vergleichsweise geringerer Klebrigkeit ganz oder weitgehend eingebettet und im Übrigen derart geformt ist, dass sich insgesamt ein rechteckiger Querschnitt des Fugenbandes ergibt.

Zur Herstellung eines derartigen Fugenbandes wird dessen Herstellung im Extrusionsverfahren vorgeschlagen, bei dem Massen unterschiedlicher Klebrigkeit und entsprechend den Querschnitten des Fugenbandkörpers sowie des Querschnittes der Deckschicht vergleichsweise geringerer Klebrigkeit koextrudiert und im Extrusionskanal zu dem Fugenprofil zusammengeführt. Längsverstärkungen mit der Wirkung einer Streckbremse, wie Fäden oder Gewebe können zwischen den beiden Schichten während des Koextrudierens eingelegt und dadurch in das Fugenband eingearbeitet werden.

Um die Beständigkeit und die innere Haftung des Fugenbandes zu erhöhen, kann eine Mischzone zwischen dem Material des Fugenbandkörpers und der Schicht vergleichsweise geringerer Klebrigkeit eingefügt werden. Dies kann durch Koextrusion einer geformten Lage aus geeignet gemischter bitumenhaltiger Masse geschehen. Eine Mischzone kann auch dadurch geschaffen werden, dass die Materialauswahl und die Temperaturbedingungen sowie Druckbedingungen für das Material des Fugenbandkörpers und für das Material der Deckschicht vergleichsweise geringerer Klebrigkeit so getroffen werden, dass eine Schnellhaftung erzielt wird und/oder insbesondere ein diffusionsbedingtes, schnelles und/oder tiefes ein- oder gegenseitiges Eindringen bzw. Verbinden der Grenzschichtmoleküle an der Grenzschicht zwischen dem Fugenbandkörper und der Schicht vergleichsweise geringerer Klebrigkeit unter Ausbilden der Mischzone eintritt.

Vorteilhafte Ausführungsformen der Erfindung werden u.a. dadurch erreicht, dass
- der Fugenbandkörper (1) prismenförmig ausgebildet ist;
- eine zwischen dem Fugenbandkörper (1) und der Deckschicht (2) gelegenen Mischzone (3) prismenförmig ausgebildet ist;
- die stegförmige Schicht sich zu mindestens einer Schmalseite des Fugenbandes hin verbreitert.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in der - beispielhaft - bevorzugte Ausführungsbeispiele erfindungsgemäßer anschmelzbarer plastisch-elastischer Bitumen-Fugenbänder zur Herstellung von Nähten und von Anschlüssen und Verfahren zu dessen Herstellung dargestellt ist.

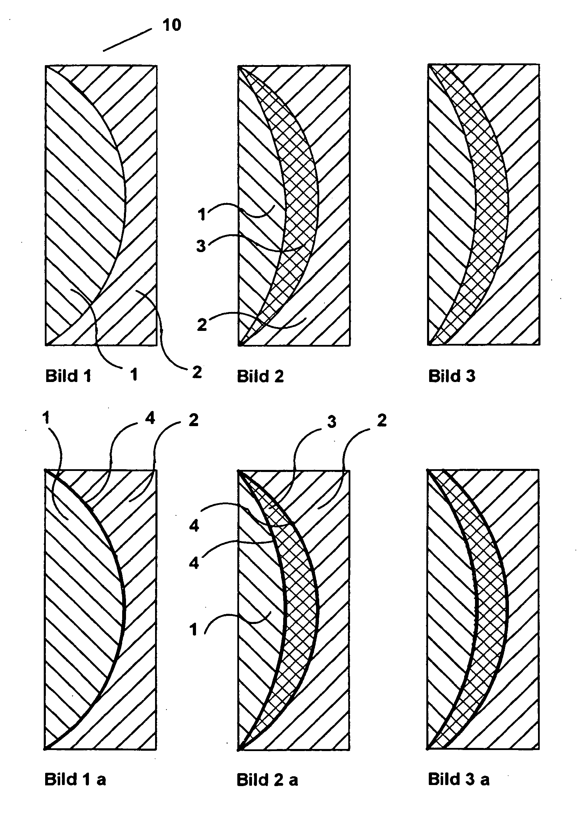

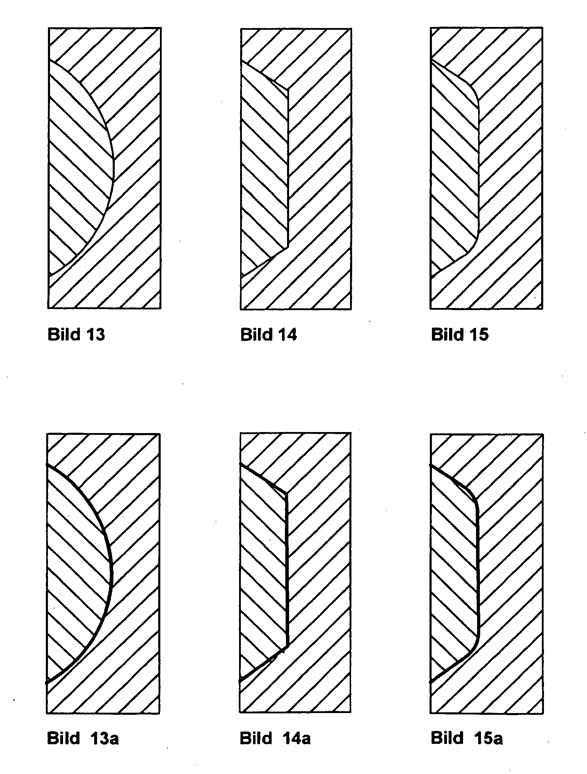

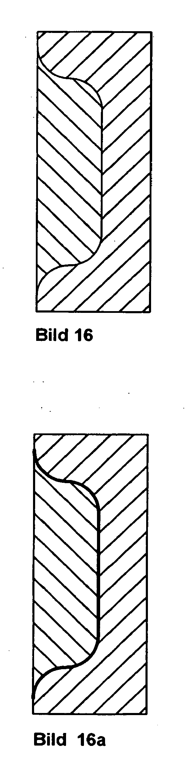

In der Zeichnung zeigen: Bilder/Figuren 1 bis 16a Bitumen-Fugenbänder gleichen Querschnittes, aber unterschiedlichen inneren Aufbaus.

Die dargestellten Fugenbänder bestehen aus bis zu vier Komponenten, wobei der aus einer bitumenhaltigen Masse bestehende Fugenbandkörper 1 Zusammensetzungen in folgenden Mischungsbereichen aufweisen kann: 40 bis 90 Massen-% Bitumen, 1 bis 10 Massen-% Polymer, wie thermoplastischem Kautschuk, Styrolbutadien Styrol oder dergleichen, 1 bis 10 Massen-% mindestens eines Weichmachers, wie eines Öls, insbesondere naphtareichen Ölen, 10 bis 70 Massen-% mindestens eines Mineralstoffes, wie Gesteinsmehl oder dergleichen und 1 bis 10 Massen-% Faserstoff.

Die Schicht vergleichsweise geringerer Klebrigkeit 2 ist in den Bildern mit "2" bezeichnet. Die Zusammensetzung dieser Schicht ist in dem Ausführungsbeispiel in folgenden Bandbreiten vorgesehen, die aus einer bitumenhaltigen Masse aus 30 - 80 Massen-% Bitumen, 1 - 10 Massen-% Polymer, wie thermoplastischem Kautschuk-Styrol-Butadien-Styrol oder dergleichen, 0 bis 3 Massen-% mindestens eines Weichmachers, 30 bis 80 Massen-% mindestens eines Mineralstoffes, wie Gesteinsmehl oder dergleichen und 2 bis 10 Massen-% Faserstoffen besteht.

Zwischen dem Fugenbandkörper 1 und der Schicht vergleichsweise geringerer Klebrigkeit 2 ist in einer Vielzahl von Ausführungsbeispielen eine Mischzone 3 dargestellt vorgesehen. Deren Zusammensetzung ist in den Ausführungsbeispielen so gewählt, dass sie zwischen dem Mischungsverhältnis des Fugenbandkörpers einerseits und der Schicht vergleichsweise geringerer Klebrigkeit andererseits liegt.

Schließlich können Verstärkungen 4 oder Streckbremsen in Form von Fäden, Geweben oder Strängen in den Fugenbandquerschnitt eingearbeitet sein. Diese sind in der Zeichnung schwarz ausgezogen dargestellt.

Zu den Fugenbandquerschnitten im Einzelnen:
Bilder 1 und 1a zeigen einen im Querschnitt halbkonvexen, prismenförmigen Fugenbandkörper 1, der sich ausschließlich über die ganze Höhe einer Arbeitsflankenseite erstreckt und durch eine plankonkavprismenförmigen Schicht vergleichsweise geringerer Klebrigkeit 2 zu einem Rechteck ergänzt ist. Die Kontaktebene kann gemäß Bild 1 a mit einer dünnen faser- oder gewebeförmigen Streckbremse 4 ganz oder teilweise belegt sein, wobei eine Durchdringung oder zumindest Haftung durch das beiderseitige Bitumenmaterial gewährleistet ist.
Bilder 2 und 2a zeigen zusätzlich eine konvex-konkavprismenförmige Mischzone 3 zwischen dem Fugenbandkörper 1 und der Schicht 2 vergleichsweise geringerer Klebrigkeit. Auch hier nimmt die letztere sowohl die obere als auch die untere Randzone des Bitumen-Fugenbandes in voller Breite ein.
Bild 3 und 3a zeigt eine Ausführungsform, bei der die Mischzone sich an ihrem oberen und unteren Rand auch in die obere und untere Randschicht des Fugenbandes hinein erstreckt.

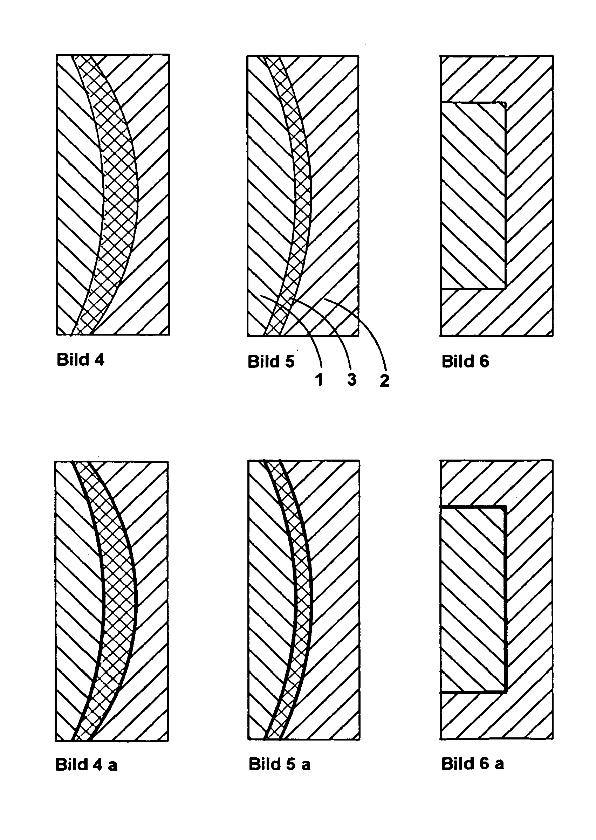

Bei dem Ausführungsbeispiel nach Bild 4 und 4a erstreckt sich auch der Fugenbandkörper an seinem oberen und unteren Ende ein Stück in die obere und untere Querseite des Fugenbandes 10 hinein. Dieser Effekt ist bei der Ausführungsform nach Fig. 5, 5a noch verstärkt, wobei bei dieser Ausführungsform die Mischzone ein gebogenes Band gleicher Dicke darstellt.

Bei den Ausführungsbeispielen nach Bild. 6, 6a ist der Fugenbandkörper 1 rechteckig und erstreckt sich die Schicht 2 vergleichsweise geringerer Klebrigkeit an drei Seiten um den Fugenbandkörper herum und mündet an der Arbeitsflankenseite am obereren und unteren Flankenrand.

Bild 7, 7a zeigt eine Ausführungsform, bei der der Fugenbandkörper 1 von einer stegförmigen Schicht vergleichsweise geringerer Klebrigkeit unterteilt ist, wobei die oberen und unteren Randbereiche von der Schicht 2 gebildet werden und eine etwas dünnere Schicht des vergleichsweise geringer klebrigen Materials an der in der Zeichnung rechten Fugenbandseite den Fugenbandkörper dieser Seite, vorzugsweise dünn überzieht.

Bei der Ausführungsform nach Bild 8, 8a ist eine ähnliche Situation wie in Bild 1, 1a verwirklicht, wobei anstelle korrespondierender Linsenformen ein trapezförmig gebildeter Fugenkörper vorgesehen ist, der zu einem Rechteck ergänzt wird von der Schicht 2 vergleichsweise geringerer Klebrigkeit.

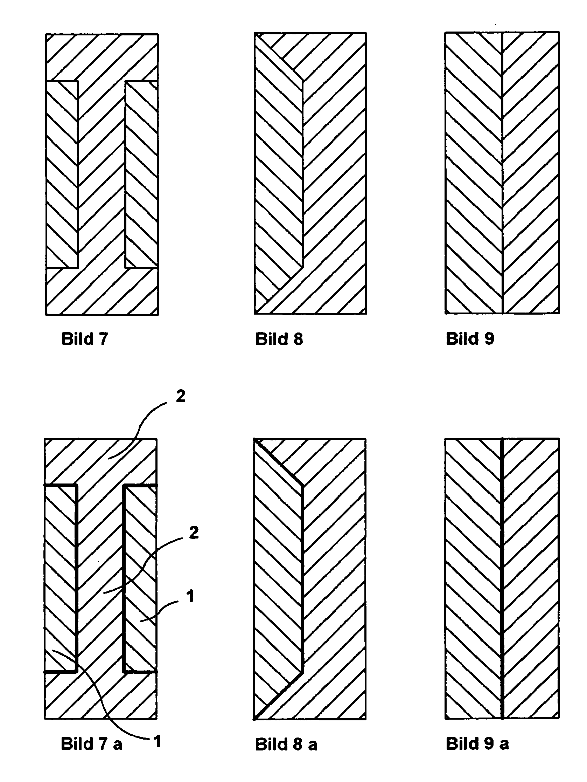

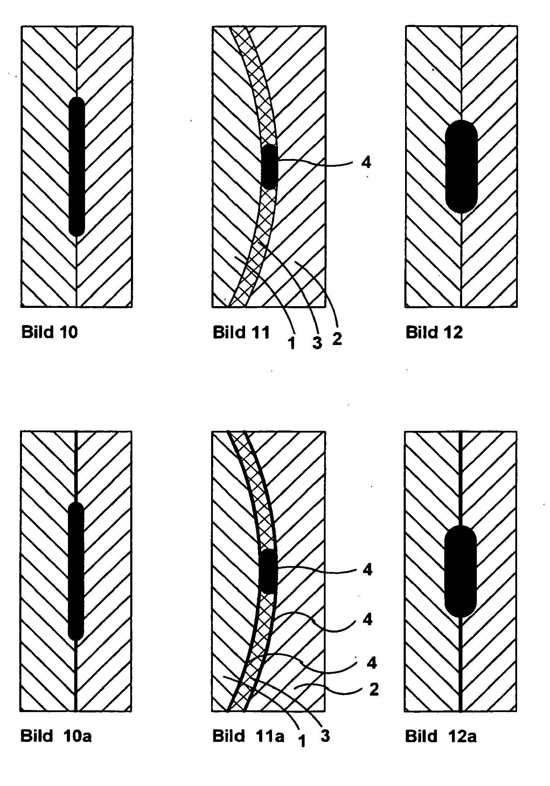

Bei den Ausführungsformen nach Bildern 9, 9a und 10, 10a ist der Fugenbandkörper wie auch die Schicht vergleichsweise Klebrigkeit 2 rechteckig ausgebildet, wobei Figuren 9a und 10a an der Trennschicht eine dünne Streckbremse 4 aufweist, die bei der Ausführung nach Bild 10, 10a im Querschnittsinneren eine Schicht größerer Dicke bildet.

Das Ausführungsbeispiel nach Bild 11, 11a entspricht im geometrischen Grundaufbau dem Ausführungsbeispiel nach Bild 5, 5a, wobei ein vergleichsweise großkalibriger leicht ovaler Strang als Streckbremse querschnittsmittig vorgesehen ist und ergänzende Streckbremsen sich an den Berührungszonen der drei Schichten 1, 2 und 3 vorgesehen sein können.

Das Ausführungsbeispiel nach Bild 12, 12a entspricht der Ausführungsform nach Bild 10, 10a mit dem Unterschied, dass anstelle eines gleichmäßig breiten Streifens einer zentralen Streckbremse ein stark kalibrierter elyptischer Strang eines solchen Materials vorgesehen ist.

Die Ausführungsbeispiele nach Bildern 13 bis 16a stellen Varianten der Ausführungsform nach Bild 6, 6a dar.

## Patentansprüche

1. Anschmelzbares plastisch-elastisches Bitumen-Fugenband für den Ingenieur-, Straßen-, Tief-, Hoch- und Kanalbau zur Herstellung von Nähten und von Anschlüssen im Kaltverlege-System, auch zwischen Heißasphaltschichten und Rand-Begrenzungen, mit einer für das Fixieren des Fugenbandes an einer ersten, eine Arbeitsflanke bildenden Anschlussflanke ausreichenden Klebrigkeit und einer der Fugenbreite entsprechenden oder diese übersteigenden Dicke,
**dadurch gekennzeichnet, dass**
das Bitumen-Fugenband aus einem Fugenbandkörper (1) ausreichender klebriger Bitumen-Masse besteht und an mindestens einer der von der Anschlussflanke fortweisenden Seitenfläche eine anschmelzbare Deckschicht (2) vergleichsweise geringerer Klebrigkeit als die des Fugenbandkörper (1) aufweist.

2. Bitumen-Fugenband nach Anspruch 1, **dadurch gekennzeichnet, dass** die Deckschicht vergleichsweise geringerer Klebrigkeit bitumenhaltig ist und im Vergleich zum Fugenbandkörper (1) einen erhöhten Anteil an mineralischen Füllstoffen, Fasern und/oder sonstigen, die Klebrigkeit der Deckschicht (2) im Vergleich zum Fugenbandkörper (1) verringernden Additive aufweist.

3. Bitumen-Fugenband nach Anspruch 1 oder 2, **dadurch gekennzeichnet, dass** der Fugenbandkörper (1) aus einer bitumenhaltigen Masse aus bis 40 bis 90 Massen-% Bitumen, 1 bis 10 Massen-% Polymer, wie thermoplastischem Kunststoff, Styrolbutadien Styrol oder dergleichen, 1 bis 10 Massen-Gewichts% mindestens eines Weichmachers, wie eines Öls, insbesondere naphtareichem Öl, 10 bis 70 Massen-Gewichts% mindestens eines Mineralstoffes, wie Gesteinsmehl, oder dergleichen und 1 bis 10 Massen-Gewichts% mindestens eines Faserstoffes besteht.

4. Bitumen-Fugenband nach einem der Ansprüche 1 bis 3, **dadurch gekennzeichnet, dass** die anschmelzbare Deckschicht (2) vergleichsweise geringer Klebrigkeit aus einer bitumenhaltigen Masse aus 30 - 80 Massen-% Bitumen, 1 - 10 Massen-% Polymer, wie thermoplastischem Kautschuk-Styrol-Butadien-Styrol oder dergleichen, 0 bis 3 Massen-% mindestens eines Weichmachers, 30 bis 80 Massen-% mindestens eines Mineralstoffes, wie Gesteinsmehl oder dergleichen und 2 bis 10 Massen-% Faserstoffen besteht.

5. Bitumen-Fugenband nach einem der Ansprüche 1 bis 4, **dadurch gekennzeichnet, dass** die Deckschicht vergleichsweise geringerer Klebrigkeit den Fugenbandkörper (1) dreiseitig umgibt.

6. Bitumen-Fugenband nach einem der Ansprüche 1 bis 5, **dadurch gekennzeichnet, dass** die Deckschicht vergleichsweise geringerer Klebrigkeit etwa rinnenförmig ausgebildet ist.

7. Bitumen-Fugenband nach einem der Ansprüche 1 bis 6, **dadurch gekennzeichnet, dass** der Fugenbandkörper (1) und die Deckschicht (2) gemeinsam einen etwa rechteckigen oder keilförmigen Querschnitt des Fugenbandes ergeben.

8. Bitumen-Fugenband nach einem der Ansprüche 1 bis 7, **gekennzeichnet durch** mindestens eine, insbesondere als Streckbremse ausgebildete, insbesondere strangförmige Längsverstärkung (4) an der Grenzschicht zwischen dem Fugenbandkörper (1) und der Deckschicht (2) oder innerhalb mindestens einer der beiden Schichten.

9. Bitumen-Fugenband nach einem der Ansprüche 1 bis 8, **gekennzeichnet durch** eine Mischzone (2) zwischen dem Material des Fugenbandkörpers (1) und der Deckschicht (2) vergleichsweise geringerer Klebrigkeit.

10. Bitumen-Fugenband nach einem der Ansprüche 1 bis 9, **dadurch gekennzeichnet, dass** eine Schicht vergleichsweise geringerer Klebrigkeit den Fugenbandkörper (1) unterteilt.

11. Bitumen-Fugenband nach Anspruch 10, **dadurch gekennzeichnet, dass** ein von einer Deckschicht vergleichsweise geringerer Klebrigkeit abgeteilter Teil des Fugenbandkörper (1) an einer Außenflanke von einer Schicht vergleichsweise geringerer Klebrigkeit, insbesondere dünn, überzogen ist.

12. Verfahren zum Herstellen eines anschmelzbaren Fugenbandes nach einem der Ansprüche 1 bis 11, **dadurch gekennzeichnet, dass** ein Fugenbandkörper (1) und eine anschmelzbare Deckschicht (2) vergleichsweise geringerer Klebrigkeit mittels Extrusionen, insbesondere im Mehrschichtverfahren, zusammengeführt werden.

13. Verfahren nach Anspruch 12, **dadurch gekennzeichnet, dass** der Fugenbandkörper und die Deckschicht vergleichsweise geringerer Klebrigkeit in einem Extrusionskanal zu dem Bitumen-Fugenbandprofil zusammengeführt werden.

14. Verfahren nach Anspruch 12 oder 13, **dadurch gekennzeichnet, dass** die bitumenhaltige Masse des Fugenbandkörpers und eine bitumenhaltige Masse für die Deckschicht unter unterschiedlichen Temperatur- und/oder Druckbedingungen durch Koextrusion zu dem Bitumen-Fugenband zusammengeführt werden.

## Claims

1. Surface-fusable plastic-elastic bitumen joint strip for structural engineering, road building, underground engineering, high-rise construction and canal building for producing seams and connections using the cold laying method, including between hot rolled asphalt layers and edge boundaries, having sufficient stickiness for fixing the joint strip at a first connecting flank forming a working flank and having a thickness corresponding to or exceeding the joint width, **characterised in that** the bitumen joint strip comprises a joint strip body (1) of sufficiently sticky bitumen mass and, on at least one side surface extending from the connecting flank, a surface-fusable cover layer (2) of relatively lower stickiness than that of the joint strip body (1).

2. Bitumen joint strip according to claim 1, **characterised in that** the cover layer of relatively lower stickiness contains bitumen and, compared with the joint strip body (1), has a higher proportion of mineral fillers, fibres and/or other additives reducing the stickiness of the cover layer (2) compared with the joint strip body (1).

3. Bitumen joint strip according to claim 1 or 2, **characterised in that** the joint strip body (1) comprises a bitumen-containing mass made from 40% to 90% by mass of bitumen, 1% to 10% by mass of polymer, such as thermoplastic material, styrene butadiene styrene or the like, 1% to 10% by mass of at least one softening agent, such as an oil, particularly naphtha-rich oil, 10% to 70% by mass of at least one mineral such as rock dust or the like and 1% to 10% by mass of at least one fibrous material.

4. Bitumen joint strip according to one of the claims 1 to 3, **characterised in that** the surface-fusable cover layer (2) of relatively low stickiness comprises a bitumen-containing mass made from 30% to 80% by mass of bitumen, 1% to 10% by mass of polymer, such as thermoplastic rubber styrene butadiene styrene or the like, 0% to 3% by mass of at least one softening agent, 30% to 80% by mass of at least one mineral such as rock dust or the like and 2% to 10% by mass of fibrous materials.

5. Bitumen joint strip according to one of the claims 1 to 4, **characterised in that** the cover layer of relatively lower stickiness surrounds the joint strip body (1) on three sides.

6. Bitumen joint strip according to one of the claims 1 to 5, **characterised in that** the cover layer of relatively lower stickiness is configured approximately furrow-shaped.

7. Bitumen joint strip according to one of the claims 1 to 6, **characterised in that** the joint strip body (1) and the cover layer (2) together result in an approximately rectangular or wedge-shaped cross section of the joint strip.

8. Bitumen joint strip according to one of the claims 1 to 7, **characterised by** at least one longitudinal reinforcement (4), particularly configured as a stretch-preventer, particularly strand-shaped, at the border layer between the joint strip body (1) and the cover layer (2) or within at least one of the two layers.

9. Bitumen joint strip according to one of the claims 1 to 8, **characterised by** a mixing zone (2) between the material of the joint strip body (1) and the cover layer (2) of relatively lower stickiness.

10. Bitumen joint strip according to one of the claims 1 to 9, **characterised in that** a layer of relatively lower stickiness subdivides the joint strip body (1).

11. Bitumen joint strip according to claim 10, **characterised in that** a part of the joint strip body (1) separate from a cover layer of relatively lower stickiness is drawn, particularly thinly, over an outer flank of a layer of relatively lower stickiness.

12. Method for producing a surface-fusable joint strip according to one of the claims 1 to 11, **characterised in that** a joint strip body (1) and a surface-fusable cover layer (2) of relatively lower stickiness are brought together by means of extrusion, particularly in a multiple-layer process.

13. Method according to claim 12, **characterised in that** the joint strip body and the cover layer of relatively lower stickiness are brought together in an extrusion channel into the bitumen joint strip profile.

14. Method according to claim 12 or 13, **characterised in that** the bitumen-containing mass of the joint strip body and a bitumen-containing mass for the cover layer are brought together into the bitumen joint strip under different temperature and/or pressure conditions by coextrusion.

## Revendications

1. Bande d'assemblage fusible plastique-élastique en bitume pour les constructions techniques, les travaux routiers, les travaux en excavation ou hors sol et la construction de canaux pour la fabrication d'assemblage et de branchement dans des systèmes de pose à froid, ainsi qu'entre des couches d'asphalte chaud et des limitations de bord ayant une adhésivité suffisante pour fixer la bande d'assemblage sur un premier flanc d'assemblage constituant un flanc de travail et une épaisseur correspondant à la largeur de l'assemblage ou dépassant celle-ci,
bande **caractérisée en ce qu'**
elle est réalisée en un corps de bande d'assemblage (1) formé d'une masse de bitume ayant une adhésivité suffisante et comportant sur au moins une surface latérale non tournée vers le flanc d'assemblage, une couche de couverture (2), fusible, d'adhésivité relativement plus réduite que celle du corps de la bande d'assemblage (1).

2. Bande d'assemblage en bitume selon la revendication 1,
**caractérisée en ce que**
la couche de couverture contient du bitume ayant une adhésivité relativement plus faible et par comparaison au corps de la bande d'assemblage (1), une teneur plus importante en charges minérales, en fibres, et/ou autres additifs, diminuant l'adhésivité de la couche de couverture (2) par comparaison à celle du corps de la bande d'assemblage (1).

3. Bande d'assemblage en bitume selon la revendication 1 ou 2,
**caractérisée en ce que**
le corps de la bande d'assemblage (1) est formé d'une masse contenant du bitume représentant entre 40 et 90 % massique de bitume, entre 1 et 10 % massique de polymère tel qu'une matière thermoplastique, du styrène-butadiène-styrène ou analogue, entre 1 et 10 % massique d'au moins un plastifiant tel qu'une huile, notamment une huile riche en naphtène, entre 10 et 70 % massique d'au moins une matière minérale telle qu'une farine minérale ou analogue et entre 1 et 10 % massique d'au moins un colorant.

4. Bande d'assemblage en bitume selon l'une des revendications 1 à 3,
**caractérisée en ce que**
la couche de couverture fusible (2) d'adhésivité relativement plus faible, est formée d'une masse contenant du bitume, comprenant entre 30 et 80 % massique de bitume, entre 1 et 10 % massique d'un polymère tel que du caoutchouc thermoplastique styrène-butadiène-styrène ou analogue, entre 0 et 3 % massique d'au moins un plastifiant, entre 30 et 80 % massique d'au moins une matière minérale telle qu'une farine minérale ou analogue et entre 2 et 10 % massique d'un colorant.

5. Bande d'assemblage en bitume selon l'une des revendications 1 à 4,
**caractérisée en ce que**
la couche de couverture d'adhésivité relativement plus faible, entoure le corps de la bande d'assemblage (1) sur trois côtés.

6. Bande d'assemblage en bitume selon l'une des revendications 1 à 5,
**caractérisée en ce que**
la couche de couverture d'adhésivité relativement plus faible, a sensiblement une forme de goulotte.

7. Bande d'assemblage en bitume selon l'une des revendications 1 à 6,
**caractérisée en ce que**
le corps de la bande d'assemblage (1) et la couche de couverture (2) forment en commun la section sensiblement rectangulaire ou en forme de coin de la bande d'assemblage.

8. Bande d'assemblage en bitume selon l'une des revendications 1 à 7,
**caractérisée par**
au moins une extension longitudinale (4), notamment en forme de cordon, notamment réalisée comme frein d'allongement sur la couche limite entre le corps de bande d'assemblage (1) et la couche de couverture (2) ou dans au moins l'une des deux couches.

9. Bande d'assemblage en bitume selon l'une des revendications 1 à 8,
**caractérisée par**
une zone de mélange (3) entre la matière du corps de la bande d'assemblage (1) et la couche de couverture (2) d'adhésivité relativement réduite.

10. Bande d'assemblage en bitume selon l'une des revendications 1 à 9,
**caractérisée en ce qu'**
une couche d'adhésivité relativement réduite, subdivise le corps de la bande d'assemblage (1).

11. Bande d'assemblage en bitume selon la revendication 10,
**caractérisée en ce qu'**
une partie du corps de la bande d'assemblage (1) divisée par la couche de couverture d'adhésivité relativement réduite, est revêtue au niveau d'une arête extérieure, par une couche d'adhésivité relativement réduite, notamment une couche mince.

12. Procédé de réalisation d'une bande d'assemblage fusible selon l'une des revendications 1 à 11,
procédé **caractérisé en ce qu'**
on assemble un corps de bande d'assemblage (1) et une couche de couverture (2) fusible, d'adhésivité relativement réduite par extrusion, notamment par un procédé à plusieurs couches.

13. Procédé selon la revendication 12,
**caractérisé en ce qu'**
on assemble le corps de la bande d'assemblage et la couche de couverture d'adhésivité relativement réduite, dans un canal d'extrusion pour former le profil bitume-bande d'assemblage.

14. Procédé selon les revendications 12 ou 13,
**caractérisé en ce qu'**
on assemble la masse contenant du bitume du corps de la bande d'assemblage et une masse contenant du bitume pour la couche de couverture, à des températures différentes et/ou des conditions de pression différentes par coextrusion pour former la bande d'assemblage en bitume.
